# EUROPEAN PATENT SPECIFICATION

(11) **EP 1 309 469 B1**
(45) Date of publication and mention of the grant of the patent: **11.06.2008**
(21) Application number: 01960891.8
(22) Date of filing: 17.08.2001
(51) Int. Cl.: B60P 3/04

(54) **IMPROVEMENTS IN AND RELATING TO LIVESTOCK TRANSPORTERS**
VERBESSERUNGEN AN UND IN BEZUG AUF TIERTRANSPORTER
AMELIORATIONS RELATIVES A DES VEHICULES DE TRANSPORT DE BETAIL

(30) Priority: 18.08.2000 GB 0020492
(43) Date of publication of application: 14.05.2003
(73) Proprietor: Parkhouse Country Estates Limited, Cumbria LA7 7RF (GB)
(72) Inventor: HOUGHTON, John, Michael, Cumbria LA7 7RF (GB)
(74) Representative: Clark, David James
(86) International application number: PCT/GB2001/003669
(87) International publication number: WO 2002/016164

(56) References cited:
- EP-A- 0 323 196
- FR-A- 1 106 051
- US-A- 2 610 567

## Description

### Field of the Invention

The present invention relates to livestock transporters, a method of transporting livestock and especially, but not limited to, a livestock transporter having improved airflow therethrough.

### Background to the Invention

Livestock transporters, whether they be of an integrated cab plus transport area type or comprise a trailer forming a livestock transport area to be towed behind a lorry, must have sufficient airflow therein in order for the livestock to arrive at their destination in a good condition and not distressed. The term livestock includes all animals suitable for transporting, for example chickens, pigs, sheep and cattle. The airflow must provide both cool air and fresh air. In addition, the trailer must make efficient use of the space in order for the transportation to be economic.

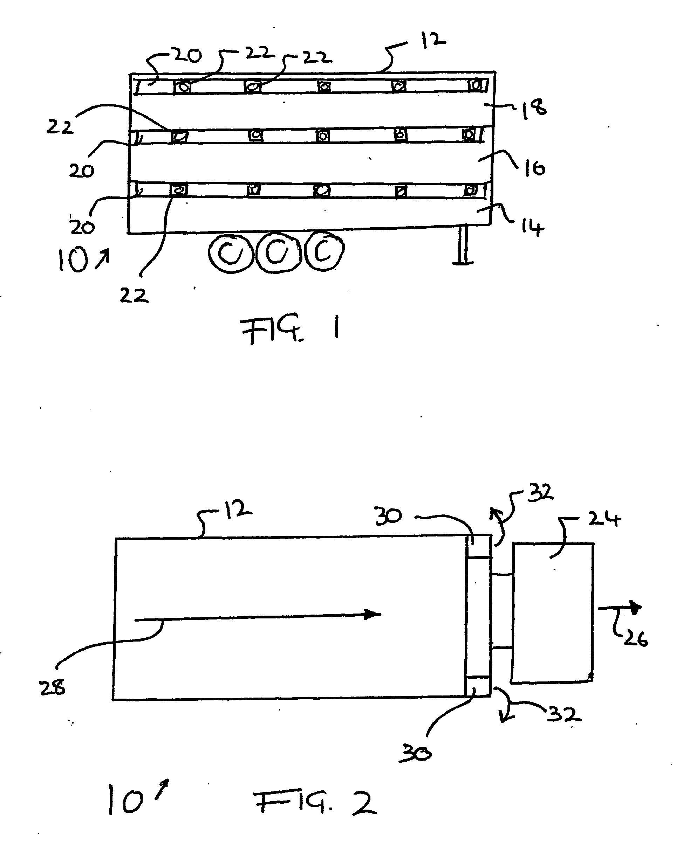

At present, there are known livestock transporters 10 which may comprise a trailer 12 having one, two, three, four or more levels. In the example of Figure 1, three levels 14, 16 and 18 are shown. Each level 14,16,18 has an elongated grill section 20 to enable air to flow into the trailer. However, during transportation the airflow through the grill section may be low. Accordingly, a plurality of electric fans 22 are provided along the length of the trailer 12 and secured within the grill sections. However, the operation of these electric fans 22 is not efficient and a portion of the airflow simply passes through the fan and re-enters the trailer through the grill and then back through the fan. Accordingly, these electric fans do not effectively and economically improve the conditions for the livestock.

In order to satisfy rules and regulations, the livestock transporters must be frequently cleaned. This may be twice or more everyday depending upon the journey to be made. In prior art transporters, as shown in Figure 1, the electric fans and their components are exposed and, during cleaning, are frequently damaged. Each fan must have a 24V battery associated therewith in order to power the fan. Accordingly, each transporter must also accommodate numerous batteries and must also have spare batteries on board. It would be expensive to provide numerous waterproof fans which would still be at risk from damage. The cleaning of the fans cannot be performed very carefully due to the time involved. Accordingly, the use of electric fans in the prior art transporter is inefficient and does not produce effective airflow. Furthermore, as a result of the frequent failure of these fans, rules and regulations may require the livestock transporter to have spare fans in the event of a failure.

US 2,610,567 describes a ventilating and heating system for use particularly in trucks carrying young chicks. The system aims to provide a uniform distribution of air to the chicks at all times by either re-circulating air, heated or otherwise, or supplying fresh air to the interior of the truck.

EP 0 323 196 describes an air circulation system for a thermostatic chamber. In the chamber and intake portions provided opposite the door of the chamber and first through fourth air ducts are provided to circulate hot air under the influence of a blower.

FR 1 106 051 describes a forced ventilation system for use in vehicles for transporting perishable goods.

It is an aim of the present invention to overcome at least one problem associated with the prior art whether referred to herein or otherwise.

### Summary of the Invention

According to the present invention there is provided an apparatus and method as set forth in the appended claims. Other features of the invention will be apparent from the dependent claims, and the description which follows.

### Brief Description of the Drawings

The present invention will now be described, by way of example only, with reference to the drawings which follow, in which:
Figure 1 is a side view of a prior art livestock transporter.
Figure 2 is a plan schematic view of a preferred embodiment of a livestock transporter.
Figure 3 is a front cross-section through a livestock transporter.
Figure 4 is a plan cross-section through a part of a livestock transporter.
Figure 5 is a perspective view of a fan.
Figure 6 is a schematic cross-section of a fan rotor.
Figure 7 is a schematic plan view of the airflow through a fan.
Figure 8 is a plan schematic diagram showing the airflow caused by natural ventilation through a livestock transporter.
Figure 9 is a plan schematic diagram showing the forced airflow of a preferred embodiment of a livestock transporter.
Figure 10 is a partially cut-away perspective view of a bulkhead of a preferred embodiment of the present invention.
Figure 11 is a perspective view of a bulkhead of a preferred embodiment of the present invention.
Figure 12 is a front view of a bulkhead of a preferred embodiment of the present invention.
Figure 13 is a partially cut-away perspective view of a bulkhead of another embodiment of the present invention.
Figure 14 is a perspective view of a bulkhead of another embodiment of the present invention.
Figure 15 is a front view of a bulkhead of another embodiment of the present invention.

### Description of the Preferred Embodiment

During transit, livestock must have sufficient available air in order to arrive at the destination in a good condition. The temperature of the livestock transporter is also critical for the condition of the livestock. In a livestock container travelling in direction 26 in Figure 2, the natural airflow travels from the back of the trailer 12 forming a livestock transport area towards the cab 24 in the direction of the arrow 28. The direction of the airflow in the trailer 12 is, therefore, in the same direction as the direction of travel, which is contrary to that generally expected. Accordingly, with a grill or other aperture located at the rear of the trailer, natural airflow is generated within the trailer during transit. If grills are also provided in the sides of the trailer then above a certain critical speed, there may be sufficient airflow in the trailer during transit. However, below the critical speed or whilst stationery, there will not be sufficient air available to the livestock and the temperature in the trailer will also rise. Accordingly, it is necessary to provide means for providing airflow in the trailer.

In accordance with the preferred embodiment, airflow means in the form of fans 30 are provided at the front of the trailer 12. These fans 30 supplement the natural airflow since they direct the airflow in the same direction as that produced naturally by movement of the trailer. Prior art methods as previously described provided a plurality of electric fans along the length of the trailer and these thereby did not supplement the natural airflow in the trailer and are, therefore, not efficient.

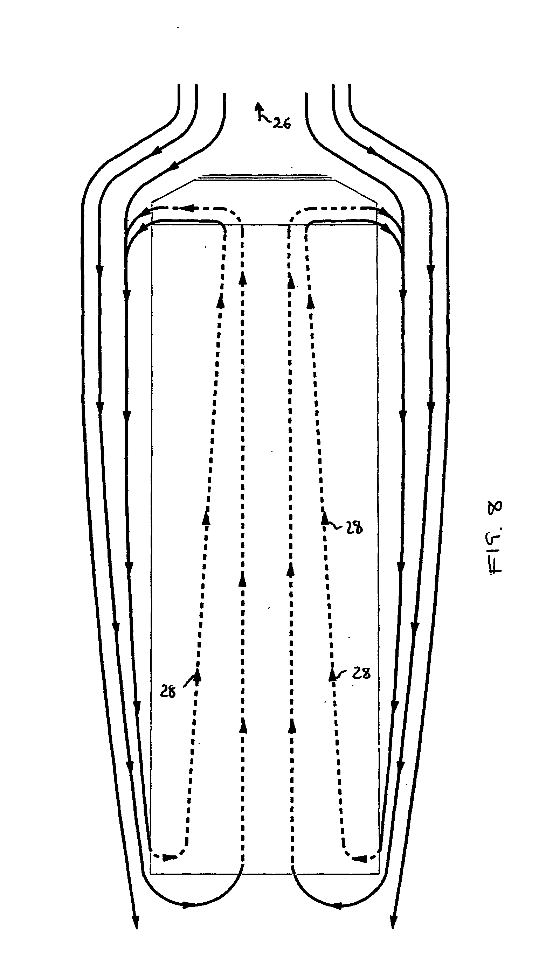

A more detailed schematic diagram of the natural ventilation of a trailer or a transporter during transit is provided by Figure 8. Air inlets towards the rear of the trailer enable air to enter into the trailer and to flow in a forward direction 28 in the direction of travel 26 of the transporter. Air outlets at the front of the transporter enable the air to flow out of the transporter and rejoins the external atmosphere.

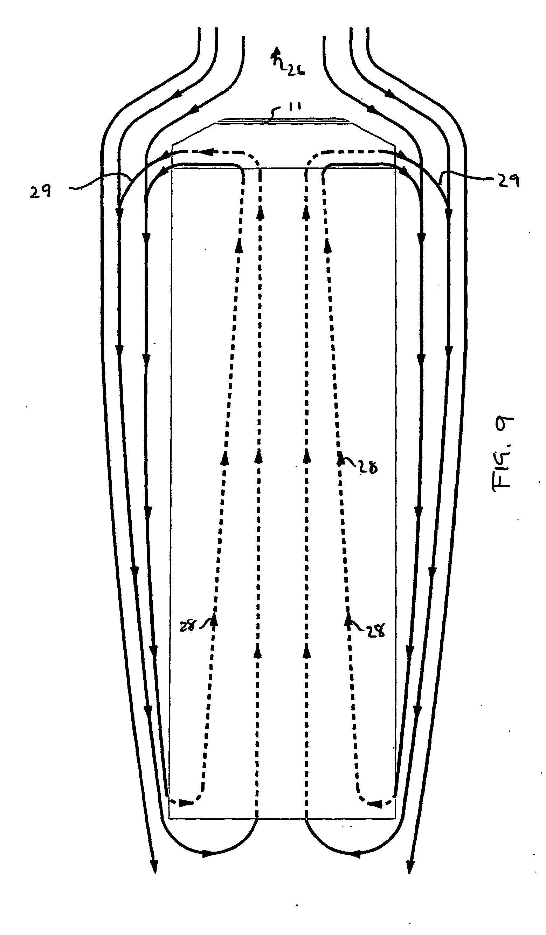

In a preferred embodiment of the present invention a bulkhead 11 is provided at the front of the trailer 12. The bulkhead includes airflow means in order to induce or supplement airflow within the trailer. A detailed schematic diagram of the forced ventilation through the trailer during transit is provided by Figure 9. The airflow means in the bulkhead 11 force the air, flow and ventilation and promotes volume, airflow direction and quality of air in harmony with the natural airflow cycle within the trailer during transit. The airflow means forces the air out of the bulkhead 11 as shown by arrow 29, and into the external atmosphere.

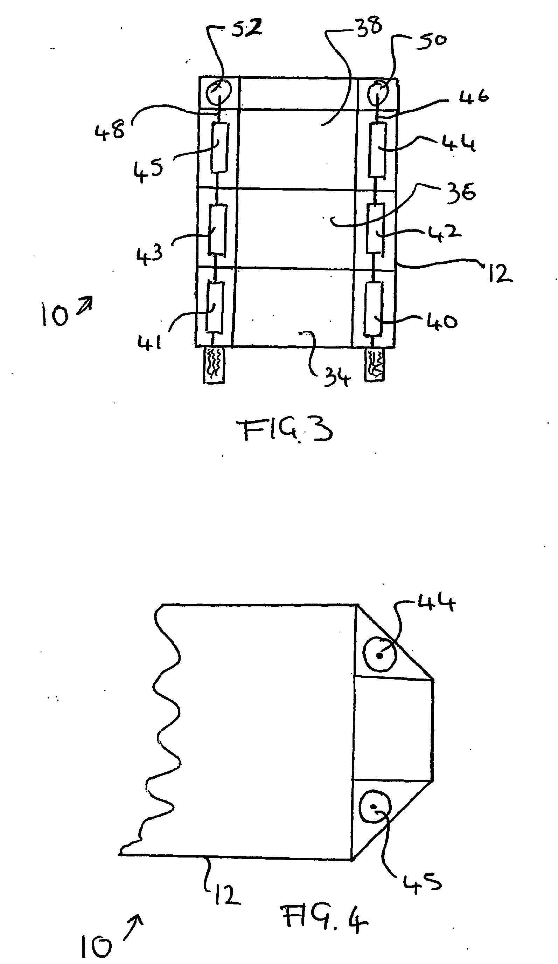

As shown in Figure 3 a trailer 12 has three levels 34,36,38 to support three levels of livestock. The number and height of the levels provided in the trailer are dependent upon the type of livestock being transported. For example, the height required for cattle will be greater than required for pigs or sheep or even chickens. The trailer may be adapted to transport different livestock at the same time by providing different heights at the different levels by adjusting the floors of the levels. As the floors need to be moved up or down or even removed, the airflow through the trailer must also be adaptable. However, with prior art methods the fans are located on fixed grills and, cannot, therefore be moved. Furthermore, the mechanism for raising and lowering the floors frequently interferes with the conventional fans which are located on the sidewalls of the trailer. In the present invention, the fans are located at the front of the trailer and are spaced from the inside of the trailer by a grill or air inlet portion. Accordingly, the present invention enables the floors of the different levels of the trailer to be easily adjusted. In addition, the air inlets of the frame may also be easily adjusted to adapt to the preferred configuration of the levels within the trailer.

Each level 34,36,38 has a pair of fans 40,41,42,43,44,45 in order to provide the airflow along the level. The first level 34 has two fans 40,41, the second level has two fans 42,43 and the third level has two fans 44,45. The fans are located adjacent to the front face of the trailer 12 and also adjacent to the side faces of the trailer 12 and are, thereby, located in the front corners of the trailer. The fans 40,41,42,43,44,45 produce airflow over substantially the full height of the respective level. In prior art methods, airflow primarily occurred along the top of the level. Accordingly, the airflow around the livestock was not sufficient or efficient since the airflow is predominantly above the livestock.

The fans are arranged in two sets of three with three fans 40,42,44 located adjacent to one lateral side and three fans 41,43,45 located adjacent to the other lateral side of the trailer. Each set of fans are located on a common drive shaft 46,48. The first drive shaft 46 is driven by a motor 50 and the second drive shaft is driven by a second motor 52. Preferably, the motors are industrial motors or electric motors. Alternatively, a single motor (not shown) may be arranged to drive both drive shafts. In a further embodiment each fan may be driven by separate drive shafts and/or motors. In a further preferred embodiment, the drive means for the fans may be provided by wind power or may be provided direct from the engine of the livestock transporter vehicle.

In the preferred embodiment, the motors 50,52 are located within motor compartments situated at the front and at the top of the trailer 12. As previously mentioned, livestock transporters need to be frequently cleaned and, therefore, the drive motors 50,52 are shielded from the exposure to pressurised water or cleaning fluids. Accordingly, this is advantageous over prior art methods whereby the motors and their components are exposed to and are damaged by the pressurised water and cleaning fluids.

The present invention may be incorporated within a livestock transporter comprising an integral trailer and cab and also within a trailer or transporter which can be separated from and secured to a separate cab unit. The front corners of the trailer 12 incorporating the fans may be angled to improve the streamlining of the trailer, as shown in Figure 4.

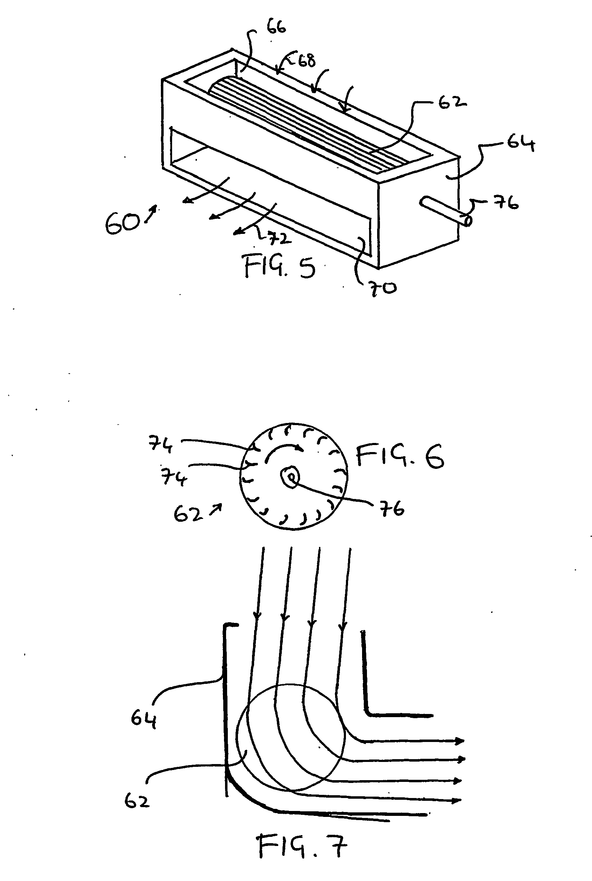

As shown in Figure 5, a fan 60 for use in the present invention comprises an elongate cylindrical rotor 62 within a housing 64. The housing has a first aperture 66 for allowing air to flow therein in the direction 68, as shown in Figure 5. The housing also has a second aperture 70 to enable air to flow out of the housing in a direction 72 which may be substantially perpendicular to the direction 68 of the flow of air into the housing 64 - this is preferred so as to avoid expelling the air directly in opposition to the direction of motion of the transporter. Alternatively, the direction of air flowing into the housing may be substantially the same as the direction of the air flowing out of the housing and the fan may further be provided with a shroud and/or ducting (not shown) to avoid such air-mass interference.

The cylindrical rotor 62 of the motor comprises a plurality of air deflecting panel 74 located around the periphery thereof, as shown in Figure 6. The air deflecting panels 74 extend in the longitudinal direction on the periphery of the cylindrical rotor for substantially the full longitudinal length of the cylindrical rotor 62. The rotor 62 is rotated by a drive shaft 76. As the rotor 62 rotates the air deflecting panels 74 create an airflow through the fan housing 64. As previously mentioned, the airflow through the fan housing may be substantially perpendicular, as shown in Figure 7.

In the present invention, it may be possible to incorporate fully enclosed lateral sides for the trailer since the present invention can provide all the necessary airflow within the trailer. With fully enclosed sides the light within the trailer can be fully controlled. During transportation, the livestock can be stressed and during daylight the livestock may be naturally lively and, therefore, agitated whilst travelling. In a fully enclosed trailer, the light could be controlled and could be dim in order to naturally sedate the livestock in order for them to be docile and hence reduce the stress of the livestock.

The livestock transporter is preferably provided with control and recordal means for controlling and recording the temperature and/or airflow within the trailer. At present, it is the driver of the livestock transporter who must manually set the fans for the trailer and the airflow and temperature of the trailer is not monitored. Accordingly, in the present invention the airflow and temperature within the trailer is automatically monitored and recorded. This is advantageous in that on arrival the purchaser will be able to review the environment in which the livestock has been transported in order to ascertain the condition of the livestock. This could also be used as proof for any regulatory bodies who may impose rules and regulations in relation to the transport of livestock. In addition, this enables the driver to concentrate on driving the livestock transporter rather than on the condition within the trailer. Furthermore, the company transporting the livestock can also prove to potential customers the condition which they can transport the livestock.

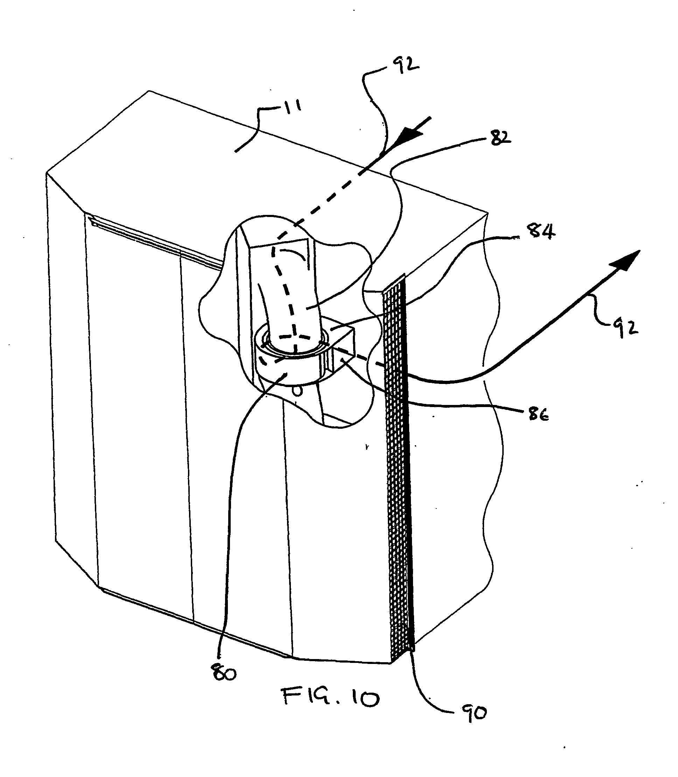

A further embodiment of the present invention is shown in Figure 10, 11 and 12. The air flow means in the bulkhead 11 comprises a number of fans 80. Each fan 80 has an associated air inlet 82 to direct air from inside the trailer into the housing 84 of each fan. The air inlet 82 may comprise a shaped duct. Each air inlet 82 has an entrance which is provided on an internal face of the trailer. The internal face may be shaped in order to promote air flow into the air flow means. The fans 80 are arranged in two sets of three fans with the first set being provided on the right hand side of the bulkhead 11 and the second set of fans being provided on the left hand side of the bulkhead. The entrances for the air inlets of the right hand side set of fans may be arranged to be directed towards the centre line or left hand side of the trailer. Similarly, the entrances for the air inlets of the left hand side set of fans may be arranged to be redirected towards the centre line or the right hand side of the trailer.

Each fan has an air outlet 86 associated therewith. Each air outlet 86 directs the air flow towards the lateral sides of the bulkhead 11. The bulkhead 11 comprises air outlets in order for air to flow from inside the bulkhead 11 to the external atmosphere. The air outlets may comprise a grill 88 or side vents which extend vertically down each lateral side of the bulkhead. The external front surface 90 of the bulkhead 11 may be shaped for streamlining purposes. The bulkhead 11 is provided with doors on the front face. The doors provide easy access to the air flow means or fans and associated motors and parts. The air flow from inside the trailer, into the bulkhead and into the external atmosphere is shown by arrows 92. In use, air flows through the container or trailer and into the duct or inlet in the bulkhead and down through the impeller fans. The air then exits the container or trailer through the outlets or side vents and into the air stream.

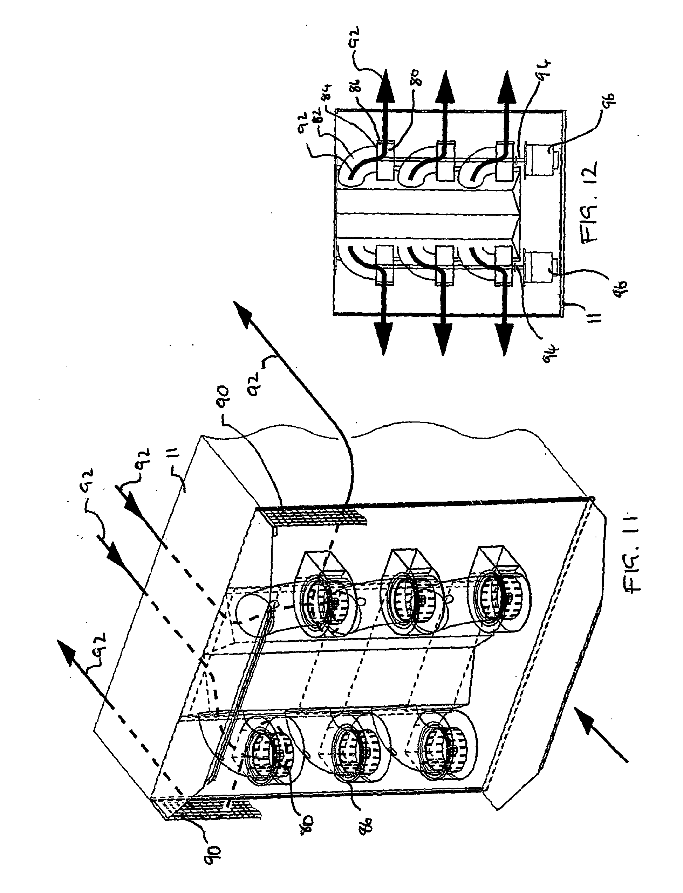

The left hand set of fans may be mounted on a common drive shaft 94 and driven by a single motor 96 as shown in Figure 12. Similarly, the right hand side of fans may be mounted on a common drive shaft 94 and driven by a single motor 96. Each motor may comprise a DC motor fitted with speed controllers which drive the impeller shafts through flexible drive couplings.

In the example shown in Figure 10, 11 and 12, two fans are provided for each level in the trailer or the transporter. Each level having a left hand fan and a right hand fan being spaced laterally in the bulkhead 11.

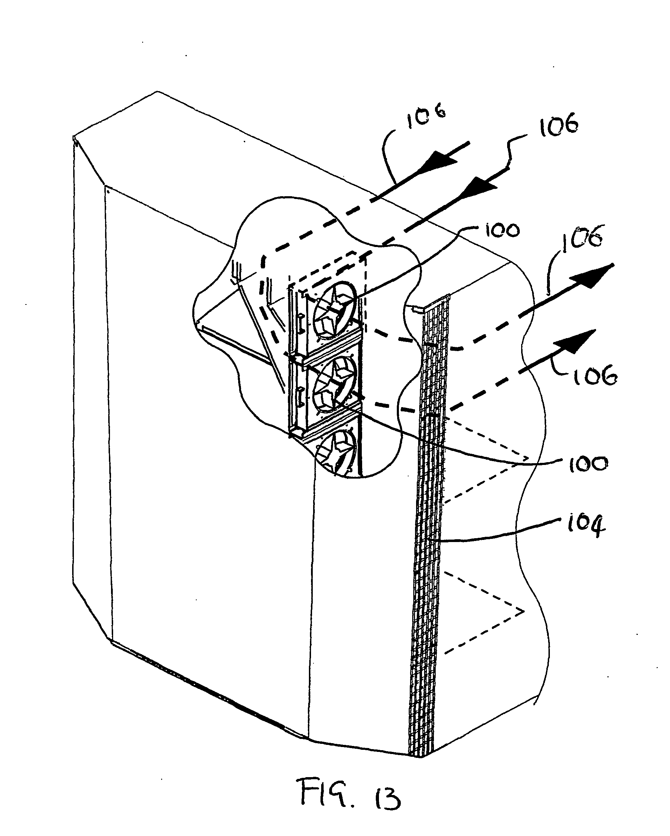

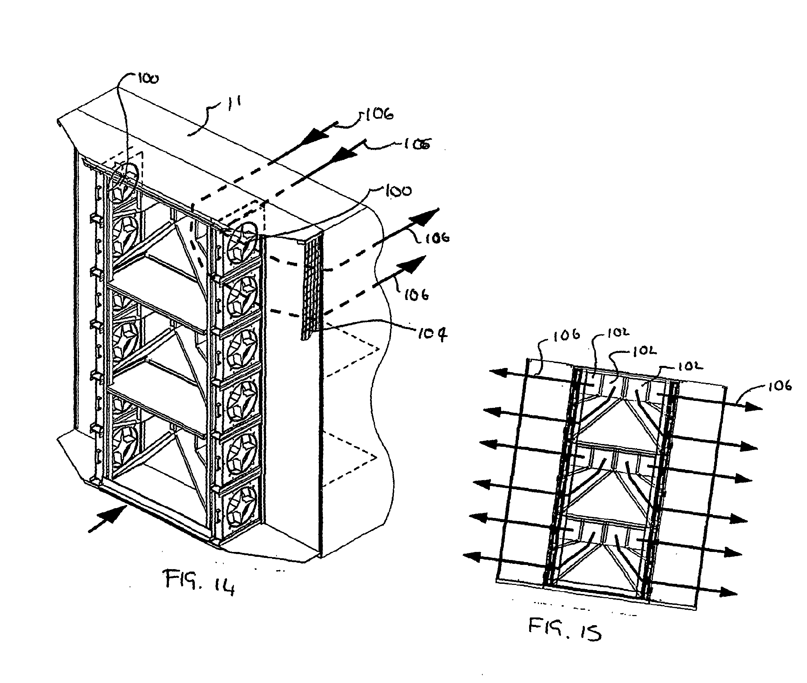

Another embodiment of the present invention is shown in Figures 13, 14 and 15. Again the bulkhead 11 is located at the front end of the trailer and is arranged to induce and promote the natural air flow in the trailer. The air flow means in the bulkhead 11 comprises a number of fans 100. The fans 100 are conventional fans. Each level of the trailer may be provided with four fans. The fans for each level are arranged such that a first pair is provided on the left hand side and a second pair is provided on the right hand side. Each fan is provided with an inlet 102 comprising a shaped passageway which directs air from inside the trailer into the fans.

The fans force the air to the lateral sides of the bulkhead. The bulkhead comprises air outlets in the form of grids 104 which enable the air to flow from inside the bulkhead to the external atmosphere. Each fan is mounted on a separate drive shaft.

The flow of air is shown by arrow 106. In use, air flow through the trailer or container and through the ducts or inlets and into the bulkhead. The air then flows through the ducts and out through the fans and exits the container or trailer through the outlets or side vents and into the air stream.

Again, the bulkhead 11 is provided with doors to enable easy access to the air flow means located inside the bulkhead.

## Claims

1. A transporter for transporting livestock, the transporter (12) comprising: an air inlet at the rear end of the transporter, an air outlet at the front of the transporter, airflow means (30) wherein the airflow means (30) produces airflow in the direction of travel of the transporter, **characterised in that** the airflow means (30) is arranged to draw air through the inlet to the outlet and to project air from inside the livestock area of the transporter (12) to the external atmosphere, such that the airflow means (30) supplements the natural airflow from the air inlet to the air outlet, produced by movement of the transporter (12) in the direction of travel (26) of the transporter (12).

2. A transporter according to any preceding claim in which the airflow means (30) is located adjacent to the end of the livestock transport area which is arranged, in use, to be forwardmost during travel.

3. A transporter according to any preceding claim in which the airflow means (30) is located in a bulk head (11) and wherein the bulkhead (11) is arranged, in use, to be located at a front end of the transporter (12).

4. A transporter according to any preceding claim in which the transporter comprises a livestock transport area which comprises a plurality of levels.

5. A transporter according to any preceding claim in which the airflow means (30) comprises a fan (60, 80, 100).

6. A transporter according to claim 5 in which the fan (60, 80) comprises an elongate cylindrical rotor.

7. A transporter according to any preceding claim in which the airflow means (30) is powered by drive means (76).

8. A transporter according to claim 7 in which the or each drive means (76, 94, 96) is located within a compartment.

9. A transporter according to claim 8 in which the or each compartment is substantially waterproof.

10. A transporter according to any one of claims 7 to 9 in which the drive means (76, 94, 96) is spaced from the airflow means.

11. A transporter according to any preceding claim in which the transporter (12) is for use by road travel.

12. A transporter according to any preceding claim in which the lateral sides of the transport area are substantially enclosed.

13. A transporter according to any preceding claim in which the transport area has control means for adjusting the airflow within it.

14. A transporter according to any preceding claim in which sensor means are provided for sensing the airflow in the transport area.

15. A method of transporting livestock in a transporter having an air inlet at a rear end thereof and an air outlet at the front thereof, the method including providing airflow means for inducing airflow within the transporter in the direction of travel of the transporter, **characterised by** drawing air through the inlet means and projecting air from inside a livestock area of the transporter to the external atmosphere through the air outlet such that the airflow means supplements the natural airflow from the air inlet to the air outlet produced by movement of the transporter in the direction of travel of the transporter.

## Patentansprüche

1. Transporter zum Transportieren von Vieh, wobei der Transporter (12) umfasst: einen Lufteinlass an der Rückseite des Transporters, einen Luftauslass an der Vorderseite des Transporters und eine Luftzufuhreinrichtung (30), wobei die Luftzufuhreinrichtung (30) Luftzufuhr in der Fahrtrichtung des Transporters erzeugt, und **dadurch gekennzeichnet ist, dass** die Luftzufuhreinrichtung (30) eingerichtet ist, um Luft durch den Einlass zu dem Auslass zu saugen und um Luft aus dem Inneren des Viehbereichs aus dem Transporter (12) in die Außenatmosphäre zu fördern, so dass die Luftzufuhreinrichtung (30) die natürliche Luftzufuhr von dem Lufteinlass zu dem Luftauslass ergänzt, die durch Bewegung des Transporters (12) in Fahrtrichtung (26) des Transporters (12) erzeugt wird.

2. Transporter nach Anspruch 1, wobei die Luftzufuhreinrichtung (30) angrenzend an das Ende des Viehtransportbereichs, das in Verwendung eingerichtet ist, um während der Fahrt das vorderste zu sein, angeordnet ist.

3. Transporter nach einem der vorhergehenden Ansprüche, wobei die Luftzufuhreinrichtung (30) in einem Schott (11) angeordnet ist und wobei das Schott (11) in Verwendung eingerichtet ist, um sich an einer Vorderseite des Transporters (12) zu befinden.

4. Transporter nach einem der vorhergehenden Ansprüche, wobei der Transporter einen Viehtransportbereich enthält, der eine Vielzahl von Ebenen umfasst.

5. Transporter nach einem der vorhergehenden Ansprüche, wobei die Luftzufuhreinrichtung (30) ein Gebläse (60, 80, 100) umfasst.

6. Transporter nach Anspruch 5, wobei das Gebläse (60, 80) einen länglichen zylindrischen Rotor umfasst.

7. Transporter nach einem der vorhergehenden Ansprüche, wobei die Luftzufuhreinrichtung (30) durch eine Antriebseinrichtung (76) mit Leistung versorgt wird.

8. Transporter nach Anspruch 7, wobei sich die Antriebseinrichtung oder jede Antriebseinrichtung (76, 94, 96) innerhalb eines Kastens befindet.

9. Transporter nach Anspruch 8, wobei der oder jeder Kasten im Wesentlichen wasserdicht ist.

10. Transporter nach einem der Ansprüche 7 bis 9, wobei die Antriebseinrichtung (76, 94, 96) von der Luftzufuhreinrichtung beabstandet ist.

11. Transporter nach einem der vorhergehenden Ansprüche, wobei der Transporter (12) zur Verwendung im Straßenverkehr ist.

12. Transporter nach einem der vorhergehenden Ansprüche, wobei die Querseiten des Transportbereichs im Wesentlichen geschlossen sind.

13. Transporter nach einem der vorhergehenden Ansprüche, wobei der Transportbereich eine Regeleinrichtung zum Einstellen der Luftzufuhr im Innern des Transportbereichs hat.

14. Transporter nach einem der vorhergehenden Ansprüche, wobei Sensoreinrichtungen bereitgestellt sind, um die Luftzufuhr in dem Transportbereich zu erfassen.

15. Verfahren zum Transportieren von Vieh in einem Transporter mit einem Lufteinlass an der Rückseite davon und einem Luftauslass an der Vorderseite davon, wobei das Verfahren das Bereitstellen einer Luftzufuhreinrichtung zum Herbeiführen von Luftzufuhr innerhalb des Transporters in Fahrtrichtung des Transporters umfasst und **gekennzeichnet ist, durch** Ansaugen von Luft **durch** die Einlasseinrichtung und Fördern von Luft aus dem Innern eines Viehbereichs des Transporters **durch** den Luftauslass in die Außenatmosphäre, so dass die Luftzufuhreinrichtung die natürliche Luftzufuhr von dem Lufteinlass zu dem Lufteinlass ergänzt, die **durch** Bewegung des Transporters in Fahrtrichtung des Transporters erzeugt wird.

## Revendications

1. Véhicule de transport pour transporter du bétail, le véhicule de transport (12) comprenant : une entrée d'air à l'extrémité arrière du véhicule de transport, une sortie d'air à l'avant du véhicule de transport, un moyen d'écoulement d'air (30), dans lequel le moyen d'écoulement d'air (30) produit un écoulement d'air dans le sens de déplacement du véhicule de transport, **caractérisé en ce que** le moyen d'écoulement d'air (30) est aménagé pour aspirer de l'air de l'entrée vers la sortie et projeter l'air de l'intérieur de la zone du véhicule de transport (12) occupée par le bétail vers l'atmosphère externe de sorte que le moyen d'écoulement d'air (30) ajoute l'écoulement d'air naturel de l'entrée d'air à la sortie d'air produit par le déplacement du véhicule de transport (12) dans le sens de déplacement (26) du véhicule de transport (12).

2. Véhicule de transport selon l'une quelconque des revendications précédentes, dans lequel le moyen d'écoulement d'air (30) est situé adjacent à l'extrémité de la zone de transport de bétail, qui est agencée en service de manière à être le plus en avant au cours du déplacement.

3. Véhicule de transport selon l'une quelconque des revendications précédentes, dans lequel le moyen d'écoulement d'air (30) est situé dans une cloison de séparation (11) et dans lequel la cloison de séparation (11) est agencée en service de manière à se trouver à une extrémité avant du véhicule de transport (12).

4. Véhicule de transport selon l'une quelconque des revendications précédentes, dans lequel le véhicule de transport comprend une zone de transport de bétail qui comprend une pluralité de niveaux.

5. Véhicule de transport selon l'une quelconque des revendications précédentes, dans lequel le moyen d'écoulement d'air (30) comprend un ventilateur (60, 80, 100).

6. Véhicule de transport selon la revendication 5, dans lequel le ventilateur (60, 80) comprend un rotor cylindrique allongé.

7. Véhicule de transport selon l'une quelconque des revendications précédentes, dans lequel le moyen d'écoulement d'air (30) est alimenté par des moyens d'entraînement (76).

8. Véhicule de transport selon la revendication 7, dans lequel le ou chaque moyen d'entraînement (76, 94, 96) est situé à l'intérieur d'un compartiment.

9. Véhicule de transport selon la revendication 8, dans lequel le ou chaque compartiment est sensiblement étanche à l'eau.

10. Véhicule de transport selon l'une quelconque des revendications 7 à 9, dans lequel le moyen d'entraînement (76, 94, 96) est espacé du moyen d'écoulement d'air.

11. Véhicule de transport selon l'une quelconque des revendications précédentes, dans lequel le véhicule de transport (12) est destiné à un déplacement routier.

12. Véhicule de transport selon l'une quelconque des revendications précédentes, dans lequel les côtés latéraux de la zone de transport sont sensiblement enserrés.

13. Véhicule de transport selon l'une quelconque des revendications précédentes, dans lequel la zone de transport a des moyens de commande pour ajuster l'écoulement d'air à l'intérieur de celle-ci.

14. Véhicule de transport selon l'une quelconque des revendications précédentes, dans lequel il est prévu des moyens de détection pour détecter l'écoulement d'air dans la zone de transport.

15. Procédé de transport de bétail dans un véhicule de transport ayant une entrée d'air à son extrémité arrière et une sortie d'air à l'avant, le procédé comprenant la mise en oeuvre d'un moyen d'écoulement d'air pour induire un écoulement d'air à l'intérieur du véhicule de transport dans le sens de déplacement du véhicule de transport, **caractérisé par** l'aspiration d'air par les moyens d'entrée et la projection d'air de l'intérieur de la zone du véhicule de transport occupée par le bétail vers l'atmosphère externe à travers la sortie d'air de sorte que le moyen d'écoulement d'air ajoute l'écoulement d'air naturel de l'entrée d'air à la sortie d'air produit par le déplacement du véhicule de transport dans le sens de déplacement du véhicule de transport.
